# EUROPÄISCHE PATENTSCHRIFT

(11) **EP 0 746 086 B1**
(45) Veröffentlichungstag und Bekanntmachung des Hinweises auf die Patenterteilung: **29.08.2001**
(21) Anmeldenummer: 96108110.6
(22) Anmeldetag: 21.05.1996
(51) Int. Cl.: H02M 5/458, H02M 1/08, H02M 7/48, H02P 7/292, H02P 7/63, H02P 21/00

(54) **Stromrichter**
Power converter
Convertisseur

(30) Priorität: 30.05.1995 DE 19519759
(43) Veröffentlichungstag der Anmeldung: 04.12.1996
(73) Patentinhaber: SIEMENS AKTIENGESELLSCHAFT, 80333 München (DE)
(72) Erfinder: Klug, Rolf-Dieter, Dr.-Ing., 90427 Nürnberg (DE); Weisshaar, Berhard, Dipl.-Ing., 91074 Herzogenaurach (DE)

(56) Entgegenhaltungen:
- EP-A- 0 410 463
- EP-A- 0 417 805
- EP-A- 0 489 948

## Beschreibung

Die Erfindung betrifft einen Stromrichter, der auf einer Seite an einem Induktivitäten enthaltenden Wechselspannungssystem, z. B. Trafo, Netz, Motor, und auf der anderen Seite an einem Gleichspannungskreis mit einer Kapazität angeschlossen ist und durch eine Steuer- und Regeleinrichtung gesteuert wird.

Große drehzahlveränderbare Drehstrommotoren werden über Direktumrichter oder Zwischenkreisumrichter aus dem Drehstromnetz gespeist. Bei Spannungszwischenkreisumrichtern ist ein netzseitiger Stromrichter über einen Spannungszwischenkreis mit Zwischenkreiskapazität mit einem motorseitigen Stromrichter verbunden. Die Zwischenkreiskapazität auf der einen Seite des Stromrichters und die Induktivitäten des Mehrphasensystems auf der anderen Seite können Resonanzschwingungen verursachen, die durch die Steuer- und Regeleinrichtung des Stromrichters ausgeregelt bzw. gedämpft werden müssen. Bei sehr hohen Stromrichterleistungen ist jedoch die maximale Schaltfrequenz der Stromrichterventile begrenzt, so daß Resonanzschwingungen mit hoher Frequenz durch die Steuer- und Regeleinrichtung nicht mehr ausgeregelt oder gedämpft, sondern sogar angeregt werden können. Durch den Einsatz großer Zwischenkreiskapazitäten läßt sich zwar die Frequenz der Resonanzschwingungen herabsetzen, jedoch ist der damit verbundene gerätetechnische Aufwand relativ groß.

Aus der EP-A-0 489 948 ist bekannt, bei einem Umrichter mit Gleichstromzwischenkreis einen Dämpfungskreis zwischen den beiden Stromrichtern des Gleichstromzwischenkreises vorzusehen. Ein derartiger Dämpfungskreis ist jedoch aufwendig und setzt die Zuverlässigkeit eines derartigen Stromrichters herab.

Zur Lösung des angegebenen Problems ist gemäß der Erfindung vorgesehen, daß bei dem Stromrichter der eingangs angegebenen Art die Steuer- und Regeleinrichtung eine Schwingungsdämpfungseinrichtung enthält, die auf die von der Kapazität und den Induktivitäten des Wechselspannungssystems definierte Resonanzfrequenz abgestimmt ist. Hierdurch wird eine effektive Dämpfung von möglichen Resonanzschwingungen erzielt, ohne daß die Zwischenkreiskapazität erhöht oder zur Erhöhung der Taktfrequenz der Steuer- und Regeleinrichtung die Stromrichterleistung verringert werden muß.

Vorzugsweise enthält die Schwingungsdämpfungseinrichtung auf die Resonanzfrequenz abgestimmte Bandpaßfilter, die aus schwingungsbehafteten Signalen der Steuer- und Regeleinrichtung die zu dämpfende Schwingung herausfiltern, wobei die herausgefilterte Schwingung im Sinne einer Schwingungsdämpfung auf die schwingungsbehafteten Signale aufgeschaltet wird. Auf diese Weise wird eine aktive Schwingungsdämpfung erzielt, indem der aus den schwingungsbehafteten Signalen herausgefilterte Resonanzschwingungsanteil - beispielsweise durch anschließende Verzögerung - phasenverschoben auf die Signale aufgeschaltet wird.

Mittels zweier getrennter Regelkreise in der Steuer- und Regeleinrichtung lassen sich die Wirk- und Blindleistungen bzw. -ströme in dem Wechselspannungssystem bzw. bei einem Motor der feldbildende und der momentbildende Anteil des Motorstroms einstellen; dabei ist vorzugsweise in jedem dieser Regelkreise jeweils eine Schwingungsdämpfungseinrichtung angeordnet.

Zur weiteren Erläuterung der Erfindung wird im folgenden auf die Figuren der Zeichnung Bezug genommen; im einzelnen zeigen
- FIG 1: ein Blockschaltbild eines drehzahlveränderbaren Antriebs mit einem aus zwei Stromrichtern und einem Spannungszwischenkreis stehenden Zwischenkreisumrichter,
- FIG 2: ein Blockschaltbild einer Steuer- und Regeleinrichtung zur Steuerung eines der Stromrichter und
- FIG 3: ein detaillierteres Ausführungsbeispiel der Steuer- und Regeleinrichtung.

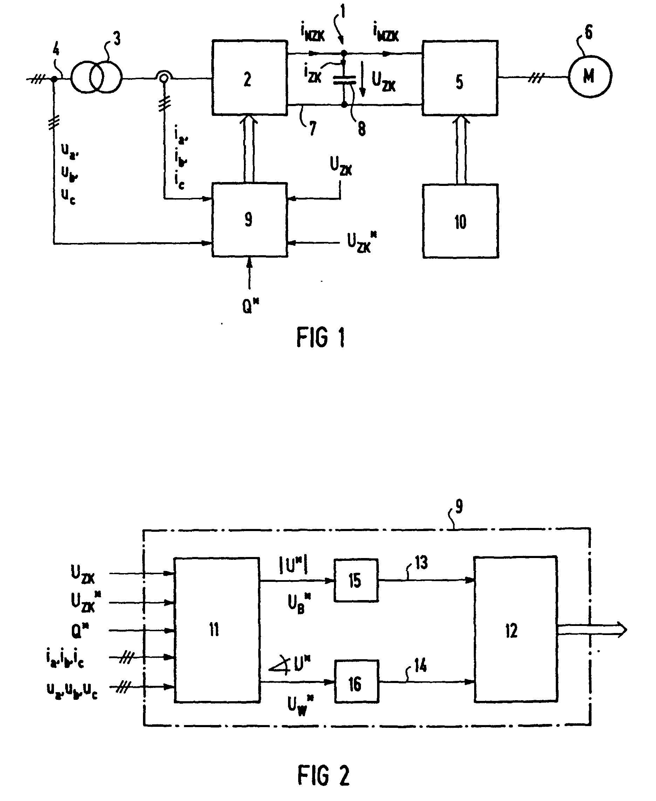

FIG 1 zeigt einen Zwischenkreisumrichter 1 mit einem netzseitigen Stromrichter 2, der über einen Transformator 3 an einem Drehstromnetz 4 angeschlossen ist, und mit einem motorseitigen Stromrichter 5, an dem ein Drehstrommotor 6 angeschlossen ist. Beide Stromrichter 2 und 5 sind über einen Spannungszwischenkreis 7 mit Zwischenkreiskapazität 8 miteinander verbunden. Der netzseitige Stromrichter 2 wird durch eine Steuer- und Regeleinrichtung 9 und der motorseitige Stromrichter 5 durch eine Steuer- und Regeleinrichtung 10 gesteuert. Zur Steuerung des netzseitigen Stromrichters 2 werden der zugehörigen Steuer- und Regeleinrichtung 9 als Eingangsgrößen die gemessene Zwischenkreisspannung U_{ZK}, ein Sollwert für die Zwischenkreisspannung U_{ZK}*, die netzseitig gemessenen Ströme iₐ, i_{b}, i_{c} und Spannungen uₐ, u_{b}, u_{c} und ein Sollwert Q* für die Blindleistung zugeführt. In Abhängigkeit von diesen Eingangsgrößen steuert die Steuer- und Regeleinrichtung 9 den netzseitigen Stromrichter 2 im Sinne der Einstellung einer vorgegebenen Wirk- und Blindleistung.

FIG 2 zeigt ein Blockschaltbild der Steuer- und Regeleinrichtung 9. Diese enthält eine Regeleinrichtung 11, die aus den obengenannten Eingangsgrößen Steuergrößen |U|*, ∠U* bzw. U_{B}*, U_{W}* für einen die hier nicht eigens gezeigten Stromrichterventile des Stromrichters 2 ansteuernden Steuersatz 12 bestimmt. Die Steuergrößen |U|* und ∠U* bezeichnen den Betrag und die Phasenlage der netzseitigen Stromrichterwechselspannung. Die hierzu alternativen Steuergrößen U_{W}* und U_{B}* bezeichnen den Wirk- und Blindanteil der Stromrichterwechselspannung.

Die Zwischenkreiskapazität 8 auf der einen Seite des Stromrichters 2 und die Induktivitäten des Transformators 3 und des Drehstromnetzes 4 auf der anderen Seite können Resonanzschwingungen verursachen, die durch die Steuer- und Regeleinrichtung 9 ausgeregelt werden müssen. Da bei hoher Stromrichterleistung die maximale Schaltfrequenz der Stromrichterventile begrenzt ist, können Resonanzschwingungen höherer Frequenz durch die Steuer- und Regeleinrichtung 9 nicht mehr ausgeregelt werden. Daher sind in den Signalwegen 13 und 14 für die von der Regeleinrichtung 11 dem Steuersatz 12 zugeführten Steuergrößen Schwingungsdämpfungseinrichtungen 15 und 16 angeordnet, die auf die von der Zwischenkreiskapazität 8 und den Induktivitäten auf der Netzseite des Stromrichters 2 definierte Resonanzfrequenz abgestimmt sind. Dadurch wird eine effektive Dämpfung von möglichen Resonanzschwingungen erzielt.

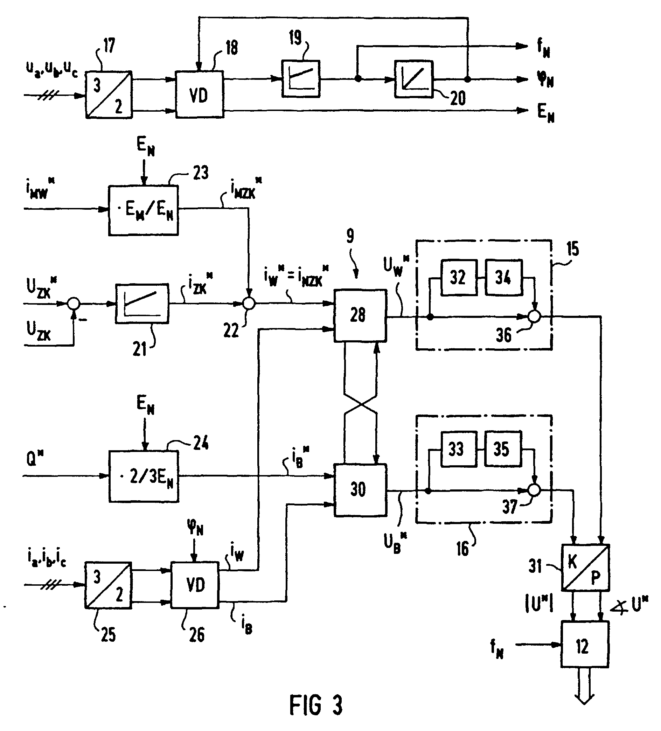

FIG 3 zeigt ein detaillierteres Blockschaltbild der Steuer- und Regeleinrichtung 9. Aus den erfaßten Netzspannungen uₐ, u_{b}, u_{c} werden mittels eines Koordinatentransformators 17 und einer aus einem Vektordreher 18, einem PI-Regler 19 und einem Integrator 20 bestehenden PLL-Schaltung die Netzfrequenz f_{N}, der Phasenwinkel ϕ_{N} und der Netzspannungsbetrag E_{N} ermittelt.

Zur Wirk-/Blindleistungsregelung werden für den Wirkstrom die Soll- und Ist-Werte i_{W}* und i_{W} und für den Blindstrom die Soll- und Ist-Werte i_{B}* sowie i_{B} ermittelt. Zur Ermittlung des Soll-Wertes i_{W}* des Wirkstromes wird die Regelabweichung zwischen dem Sollwert U_{ZK}* und dem gemessenen Ist-Wert U_{ZK} der Zwischenkreisspannung einem Zwischenkreisspannungsregler 21 zugeführt, der ausgangsseitig einen Sollwert i_{ZK}* für den durch den Stromzweig mit der Zwischenkreiskapazität 8 fließenden Strom erzeugt. Zu diesem Sollwert i_{ZK}* wird in einem Addierglied 22 ein Sollwert i_{MZK}* für den Zwischenkreisstrom des motorseitigen Stromrichters 5 hinzuaddiert. Der Sollwert i_{MZK}* wird aus einem Soll-Wert i_{MW}* für den Motorwirkstrom durch Multiplikation mit dem Quotienten aus der Motor-EMK EM und dem Netzspannungsbetrag E_{N} in einer Multipliziereinrichtung 23 erzeugt. Am Ausgang des Addiergliedes 22 steht somit der Sollwert i_{NZK}* für den Zwischenkreisstrom des Stromrichters 2 zur Verfügung, der dem Sollwert i_{W}* für den netzseitigen Wirkstrom entspricht.

Der Soll-Wert i_{B}* für den Blindstrom wird in einem weiteren Multiplizierglied 24 durch Multiplikation des Blindleistungs-Sollwertes Q* mit dem Faktor 2/(3E_{N}) erzeugt.

Die Ist-Werte i_{W} und i_{B} für den Wirkstrom und den Blindstrom werden mittels eines Koordinatentransformators 25 und eines Vektordrehers 26 aus den gemessenen Netzströmen iₐ, i_{b} und i_{c} erzeugt.

Der Sollwert i_{W}* und der Istwert i_{W} des Wirkstromes werden einem Wirkstromregler 28 zugeführt, der ausgangsseitig die Steuergröße U_{W}* erzeugt. In gleicher Weise werden der Soll-wert i_{B}* und der Istwert i_{B} des Blindstromes einem Blindstromregler 30 zugeführt, der ausgangsseitig die Steuergröße U_{B}* erzeugt. Die beiden Steuergrößen U_{W}* und U_{B}* werden jeweils über die Schwingungsdämpfungseinrichtungen 15 und 16 einem Koordinatentransformator 31 zugeführt, der durch Koordinatentransformation von kartesischen Koordinaten in Polarkoordinaten die Steuergrößen |U|* und ∠U* erzeugt. Diese werden dem Steuersatz 12 zugeführt.

Die beiden Schwingungsdämpfungseinrichtungen 15 und 16 enthalten jeweils ein Bandpaßfilter 32 bzw. 33, das auf die von der Zwischenkreiskapazität 8 und den netzseitigen Induktivitäten definierte Resonanzfrequenz abgestimmt ist. Mit diesen Bandpaßfiltern 32 und 33 wird aus den Steuergrößen U_{W}* bzw. U_{B}* die zu dämpfende Schwingung herausgefiltert und anschließend in einem Verzögerungsglied 34 bzw. 35 gegenüber dem Resonanzschwingungsanteil in den Steuergrößen U_{W}* bzw. U_{B}* verzögert. Die so herausgefilterten und verzögerten Schwingungsanteile werden in Addiereinrichtungen 36 und 37 den schwingungsbehafteten Steuergrößen U_{W}* und U_{B}* zur Schwingungsdämpfung aufgeschaltet.

Alternativ zu dem dargestellten Ausführungsbeispiel können die Schwingungsdämpfungseinrichtungen 15 und 16 auch in den Signalpfaden zwischen dem Koordinatentransformator 31 und dem Steuersatz 12 angeordnet werden.

## Patentansprüche

1. Stromrichter (2), der auf einer Seite an einem Induktivitäten enthaltenden Wechselspannungssystem (4) und auf der anderen Seite an einem Gleichspannungskreis (7) mit einer Kapazität (8) angeschlossen ist und durch eine Steuer- und Regeleinrichtung (9) gesteuert wird, die eine Schwingungsdämpfungseinrichtung (15, 16), die auf die von der Kapazität (8) und den Induktivitäten des Wechselspannungssystems (4) definierte Resonanzfrequenz abgestimmt ist, und eine Regeleinrichtung (11) sowie einen nachgeordneten, den Stromrichter (2) unmittelbar steuernden Steuersatz (12) enthält,
**dadurch gekennzeichnet,**
daß die Schwingungsdämpfungseinrichtung (15, 16) zwischen Regeleinrichtung (11) und dem Steuersatz (12) angeordnet ist.

2. Stromrichter nach Anspruch 1,
**dadurch gekennzeichnet,**
daß die Schwingungsdämpfungseinrichtung (15, 16) auf die Resonanzfrequenz abgestimmte Bandpaßfilter (32, 33) enthält, die aus schwingungsbehafteten Signalen (U_{W}*, U_{B}*) der Steuer- und Regeleinrichtung (9) die zu dämpfende Schwingung herausfiltern und daß die herausgefilterte Schwingung im Sinne einer Schwingungsdämpfung auf die schwingungsbehafteten Signale (U_{W}*, U_{B}*) aufgeschaltet wird.

3. Stromrichter nach einem der Ansprüche 1 bis 2,
**dadurch gekennzeichnet,**
daß die Steuer- und Regeleinrichtung (9) zwei getrennte Regelkreise (28, 30) zur Einstellung der Wirk- und Blindleistungen bzw. -ströme in dem Wechselspannungssystem (4) enthält und daß jedem dieser Regelkreise (28, 30) jeweils eine Schwingungsdämpfungseinrichtung (15, 16) zugeordnet ist.

4. Stromrichter nach einem der Ansprüche 1 bis 3,
**dadurch gekennzeichnet,**
daß bei einem an der Wechselspannungsseite des Stromrichters angeschlossenen Motor die Steuer- und Regeleinrichtung zwei getrennte Regelkreise zur Einstellung des feldbildenden und des momentbildenden Anteils des Motorstroms enthält und daß jedem dieser Regelkreise jeweils eine Schwingungsdämpfungseinrichtung zugeordnet ist.

## Claims

1. Power converter (2), which is connected, on one side, to an alternating-voltage system (4) containing inductances, and, on the other side, to a direct-voltage circuit (7) with a capacitance (8), and is controlled by a control and regulating device (9) which contains a vibration-damping device (15, 16), which is tuned to the resonant frequency defined by the capacitance (8) and the inductances of the alternating-voltage system (4), and a regulating device (11) as well as a downstream drive unit (12) which directly controls the power converter (2), **characterised in that** the vibration-damping device (15, 16) is arranged between the regulating device (11) and the drive unit (12).

2. Power converter according to claim 1, **characterised in that** the vibration-damping device (15, 16) contains bandpass filters (32, 33) tuned to the resonant frequency, which bandpass filters filter out of signals (U_{W}*, U_{B}*) of the control and regulating device (9) that are affected by vibration the vibration to be damped, and in that the vibration which has been filtered out is applied to the signals (U_{W}*, U_{B}*) which are affected by vibration, in the sense of a vibration damping.

3. Power converter according to one of claims 1 to 2, **characterised in that** the control and regulating device (9) contains two separate regulating circuits (28, 30) for adjusting the active and reactive powers or currents in the alternating-voltage system (4), and in that a respective vibration-damping device (15, 16) is associated with each of these regulating circuits (28, 30).

4. Power converter according to one of claims 1 to 3, **characterised in that** in the case of a motor connected to the alternating-voltage side of the power converter, the control and regulating device contains two separate regulating circuits for adjusting the field-forming and torque-producing component of the motor current, and in that a respective vibration-damping device is associated with each of these regulating circuits.

## Revendications

1. Convertisseur (2), qui est raccordé d'un côté à un système en tension alternative (4) comportant des inductances et de l'autre côté à un circuit en tension continue (7) ayant une capacité (8) et qui est commandé par un dispositif de commande et de régulation (9) qui comporte un dispositif d'affaiblissement d'oscillation (15, 16), qui est réglé sur la fréquence de résonance définie par la capacité (8) et par les inductances du système en tension alternative (4), et un dispositif de régulation (11) ainsi qu'un bloc de commande (12) branché du côté aval et commandant directement le convertisseur (2),
caractérisé par le fait que le dispositif d'affaiblissement d'oscillation (15, 16) est monté entre le dispositif de régulation (11) et le bloc de commande (12).

2. Convertisseur selon la revendication 1,
caractérisé par le fait que le dispositif d'affaiblissement d'oscillation (15, 16) comporte des filtres passe-bande (32, 33) qui sont réglés sur la fréquence de résonance et qui extraient par filtrage à partir des signaux (U_{W}*, U_{B}*), contenant des oscillations, du dispositif de commande et de régulation (9) l'oscillation à affaiblir et que l'oscillation extraite par filtrage est branchée sur les signaux (U_{W}*, U_{B}*) contenant des oscillations en vue d'un affaiblissement d'oscillation.

3. Convertisseur selon l'une des revendications 1 à 2,
caractérisé par le fait que le dispositif de commande et de régulation (9) comporte deux circuits de régulation séparés (28, 30) pour régler les puissances ou courants actif et réactif dans le système de tension alternative (4) et qu'un dispositif d'affaiblissement d'oscillation (15, 16) est associé à chacun de ces circuits de régulation (28, 30).

4. Convertisseur selon l'une des revendications 1 à 3,
caractérisé par le fait que, pour un moteur raccordé au côté de tension alternative du convertisseur, le dispositif de commande et de régulation contient deux circuits de régulation séparés pour régler la composante formant le champ et la composante du courant de moteur, qui donne le couple, et qu'un dispositif d'affaiblissement d'oscillation est associé à chacun de ces circuits de régulation.
